# EUROPEAN PATENT SPECIFICATION

(11) **EP 3 850 192 B1**
(45) Date of publication and mention of the grant of the patent: **27.12.2023**
(21) Application number: 18933708.2
(22) Date of filing: 12.09.2018
(51) Int. Cl.: F01D 5/14, F01D 5/18, F01D 5/28

(54) **HYBRID ELLIPTICAL-CIRCULAR TRAILING EDGE FOR A TURBINE AIRFOIL**
HYBRIDE ELLIPTISCH-KREISFÖRMIGE HINTERKANTE EINER TURBINENSCHAUFEL
BORD DE FUITE ELLIPTIQUE-CIRCULAIRE HYBRIDE POUR UN PROFIL AÉRODYNAMIQUE DE TURBINE

(43) Date of publication of application: 21.07.2021
(73) Proprietor: General Electric Technology GmbH, 5400 Baden (CH)
(72) Inventor: VANDEPUTTE, Thomas, William, Niskayuna, NY 12309 (US)
(74) Representative: Novagraaf Group
(86) International application number: PCT/US2018/050537
(87) International publication number: WO 2020/055387

(56) References cited:
- EP-A1- 3 231 996
- WO-A1-2010/057627
- WO-A1-2015/191041
- DE-A1-102016 222 789
- US-A1- 2003 072 649
- US-A1- 2006 245 918
- US-A1- 2013 224 034
- US-A1- 2015 233 253
- US-A1- 2017 292 528
- US-A1- 2017 370 222

## Description

### Technical Field

The invention relates to turbine airfoils and more specifically to airfoil trailing edges.

### BACKGROUND

Airfoils of finite thickness produce a wake. The loss associated with this wake is proportional to the trailing edge diameter. While designing to a thinner trailing edge diameter is aerodynamically desirable, the presence of internal cooling flow cavities and trailing edge cooling holes limit the reduction in thickness that can be practically achieved. Flow attachment, the finite thickness of the airfoil trailing edge, combined with the boundary layers that form on the suction and pressure surfaces of the airfoil, form a wake region characterized by a velocity deficit and loss generation. As the width of this defect region increases, the total loss of the airfoil increases. Cooled turbine airfoils require internal chambers to supply cooling flow to various locations along the airfoil. As part of a typical cooling scheme, holes are drilled through the end of the trailing edge to the internal chamber to provide local cooling to the trailing edge. The desire to locate the internal chamber near the trailing edge, and the diameter of the trailing edge holes, are important factors that lead to large trailing edge diameters for cooled airfoils, and hence wide, high-loss wakes.

In order to minimize loss, small trailing edge diameter may be employed. Using a traditionally designed circular trailing edge, reducing the trailing edge diameter significantly reduces the airfoil thickness far upstream of the trailing edge, which may impact the ability to design the cooling system, as internal Mach numbers for the cooling flow increases (lowering effectiveness), and the distance of the internal chamber to the trailing edge increases.

DE 10 2016 222789 A1, US 2015/233253 A1, EP 3 231 996 A1, and WO 2010/057627 A1 each disclose an airfoil of a compressor blade or a turbine blade comprising an airfoil body including a trailing edge having the features of the preamble of independent claim 1. US 2017/370222 A1 discloses a method of manufacturing an airfoil and forming ejection slots in the airfoil trailing edge.

### BRIEF DESCRIPTION

In accordance with an aspect of the invention an airfoil includes:
an airfoil body extending from a radially inner root portion to a radially outer tip portion, extending from a pressure side to a suction side, and from a leading edge to a trailing edge portion; wherein the trailing edge portion includes: a linear pressure side portion; a linear suction side portion; a trailing edge tip portion; and at least one elliptical portion disposed between the trailing edge tip portion and at least one of the linear pressure side portion and the linear suction side portion. The trailing edge tip portion comprises a circular trailing edge tip portion disposed directly downstream of the at least one elliptical portion and defined by a circle that tangentially overlaps with the at least one elliptical portion in the vicinity of the trailing edge tip. The at least one elliptical portion is defined by an ellipse having a skew angle between -10 degrees and 10 degrees and other than 0 degrees, wherein the skew angle is the angle between a major axis (a) of the ellipse (72) and a camber line (124) of the airfoil.

In accordance with another aspect of the invention a method of forming an airfoil includes: determining an elliptical curvature of at least one elliptical portion of an airfoil trailing edge, the at least one elliptical portion disposed between a trailing edge tip portion and at least one of a linear pressure side portion along an airfoil pressure side (50) and a linear suction side portion of an airfoil suction side, wherein the elliptical curvature is defined by an ellipse having an a/b ratio between about 1.1 and about 5.0, where "a" is representative of a length of a major axis of the ellipse, and where "b" is representative of a length of a minor axis of the ellipse; determing a skew angle of the elliptical portion, wherein the skew angle is defined as the angle between the major axis of the ellipse and a camber line of the airfoil, wherein the skew angle is between -10 degrees and 10 degrees and other than 0 degrees; determining a diameter of a circular trailing edge tip portion of the trailing edge tip portion, the circular trailing edge tip portion disposed directly downstream of the at least one elliptical portion and defined by a circle that tangentially overlaps with the at least one elliptical portion in the vicinity of the trailing edge tip; and forming the airfoil.

In accordance with another aspect of the embodiments disclosed herein, a gas turbine engine includes: a compressor section; a combustor section; and a turbine section, wherein the turbine section includes at least one airfoil, the at least one airfoil being configured as described above.

### DRAWINGS

These and other features, aspects, and advantages of the embodiments disclosed herein will become better understood when the following detailed description is read with reference to the accompanying drawings in which like characters represent like parts throughout the drawings, wherein:
FIG. 1 is a schematic representation of a gas turbine engine in an industrial application;
FIG. 2 is a side view of a turbine airfoil;
FIG. 3 is top radially inward-looking view of a turbine airfoil;
Fig. 4 is an enlarged radially inward-looking view of the trailing edge portion of the airfoil;
FIG. 5 is an enlarged radially inward-looking view of the trailing edge portion of the airfoil;
FIG. 6 is an enlarged radially inward-looking view of the trailing edge portion of the airfoil;
Fig. 7 is an enlarged radially inward-looking view of the trailing edge portion of the airfoil;
Fig. 8 is an enlarged radially inward-looking view of the trailing edge portion of the airfoil;
Fig. 9 is an enlarged radially inward-looking view of the trailing edge portion of the airfoil;
Fig. 10 illustrates a method of forming an airfoil; and
Fig. 11 is an enlarged radially inward-looking view of the trailing edge portion of the airfoil, the trailing edge portion as such being not configured according to the invention as claimed.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

As used herein, the term "axial" refers to a direction aligned with a central axis or shaft of the gas turbine engine or alternatively the central axis of a propulsion engine and/or internal combustion engine. An axially forward end of the gas turbine engine is the end proximate the fan and/or compressor inlet where air enters the gas turbine engine. An axially aft end of the gas turbine engine is the end of the gas turbine proximate the engine exhaust where low pressure combustion gases exit the engine via the low pressure (LP) turbine. In non-turbine engines, axially aft is toward the exhaust and axially forward is toward the inlet.

As used herein, the term "circumferential" refers to a direction or directions around (and tangential to) the circumference of an annulus of a combustor, or for example the circle defined by the swept area of the turbine blades. As used herein, the terms "circumferential" and "tangential" are synonymous.

As used herein, the term "radial" refers to a direction moving outwardly away from the central axis of the gas turbine, or alternatively the central axis of a propulsion engine. A "radially inward" direction is aligned toward the central axis moving toward decreasing radii. A "radially outward" direction is aligned away from the central axis moving toward increasing radii.

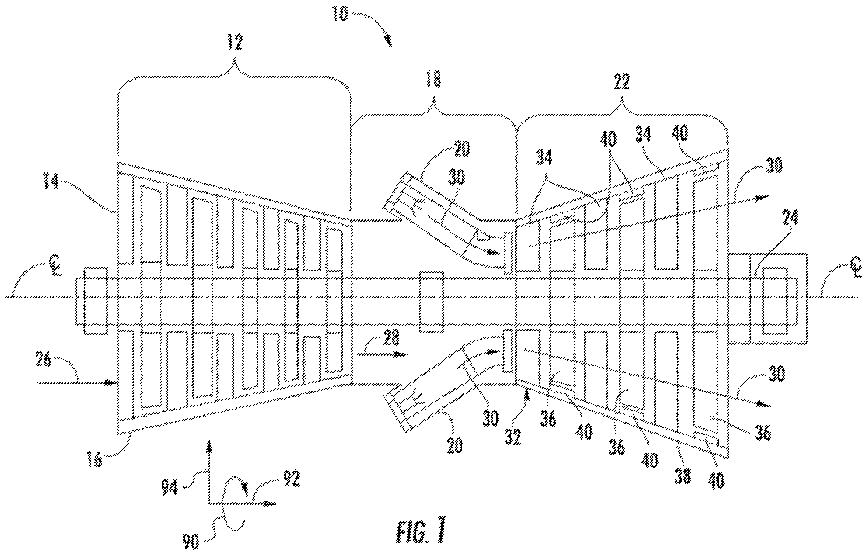

Referring now to the drawings, wherein like numerals refer to like components, Fig. 1 illustrates an example of a gas turbine 10 which may incorporate various aspects of the embodiments disclosed herein. As shown, the gas turbine 10 generally includes a compressor section 12 having an inlet 14 disposed at an upstream end of the gas turbine 10, and a casing 16 that at least partially surrounds the compressor section 12. The gas turbine 10 further includes a combustion section 18 having at least one combustor 20 downstream from the compressor section 12, and a turbine section 22 downstream from the combustion section 18. As shown, the combustion section 18 may include a plurality of the combustors 20. A shaft 24 extends axially through the gas turbine 10. Fig. 1 illustrates the radial 94, axial 92 and circumferential directions 90.

In operation, air 26 is drawn into the inlet 14 of the compressor section 12 and is progressively compressed to provide compressed air 28 to the combustion section 18. The compressed air 28 flows into the combustion section 18 and is mixed with fuel in the combustor 20 to form a combustible mixture. The combustible mixture is burned in the combustor 20, thereby generating a hot gas 30 that flows from the combustor 20 across a first stage 32 of turbine nozzles 34 and into the turbine section 22. The turbine section generally includes one or more rows of rotor blades 36 axially separated by an adjacent row of the turbine nozzles 34. The rotor blades 36 are coupled to the rotor shaft 24 via a rotor disk. The rotor shaft 24 rotates about an engine centerline CL. A turbine casing 38 at least partially encases the rotor blades 36 and the turbine nozzles 34. Each or some of the rows of rotor blades 36 may be concentrically surrounded by a shroud block assembly 40 that is disposed within the turbine casing 38. The hot gas 30 rapidly expands as it flows through the turbine section 22. Thermal and/or kinetic energy is transferred from the hot gas 30 to each stage of the rotor blades 36, thereby causing the shaft 24 to rotate and produce mechanical work. The shaft 24 may be coupled to a load such as a generator (not shown) so as to produce electricity. In addition, or in the alternative, the shaft 24 may be used to drive the compressor section 12 of the gas turbine.

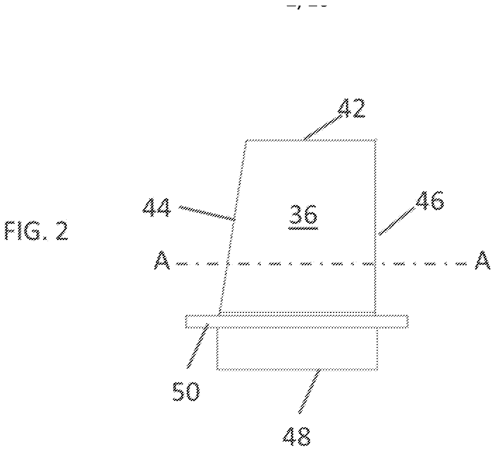

Fig. 2 provides an enlarged cross section side view of an exemplary turbine rotor blade or airfoil 36, which extends from an axially forward leading edge 44 to an axially aft trailing edge 46 and from a radially inward root 48 to a radially outer tip 42. The airfoil 36 includes a platform 50 defining a radially inner boundary of a hot gas path.

Airfoils composed of superalloy materials such as nickel-based superalloys and other metallic superalloys may be formed using investment casting, additive manufacturing and other techniques, which produces the desired material properties for operation within a turbine section 22 of a gas turbine engine 10. However, even with superalloy materials, turbine airfoils often still need to be cooled. Internal air-cooled passageways are often formed with airfoils to provide sufficient cooling to the airfoil. For example, internal cooling channels and flow circuits of an airfoil 36 may be formed using investment casting, additive manufacturing and/or via machining processes such as electrical discharge machining (EDM).

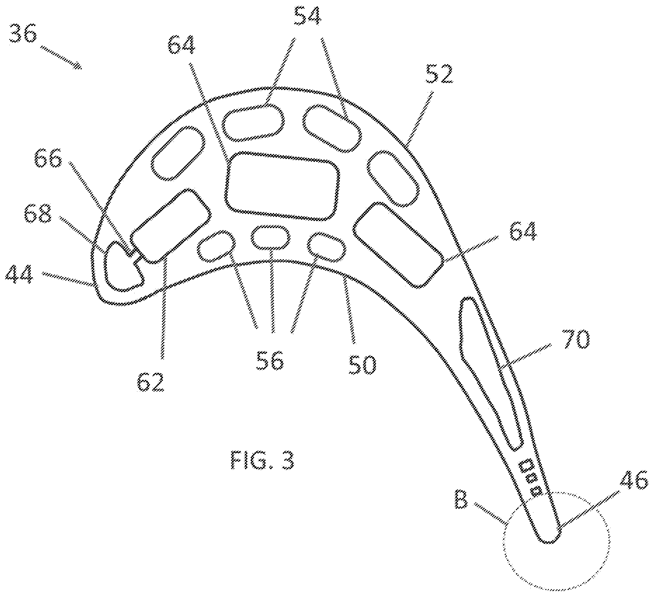

Fig. 3 illustrates a top (radially inward looking) view of a cross-section of airfoil 36 taken along line A-A shown in Fig. 2. The airfoil extends from a leading edge 44 to a trailing edge 46 and from a pressures side 50 to a suction side 52 and may include at least one central cavity 64 extending radially through the airfoil body portion 37. A leading edge feed cavity 62 extends radially through the airfoil 36 and receives cooling air from the airfoil root portion 48 (not shown). Cooling air travels through at least one cross-over hole 66 from the leading edge feed cavity 62 into a leading edge shower head 68 which distributes cooling air to the exterior of the airfoil 36 at the leading edge 44 via a plurality of cooling passages (not shown). The airfoil 36 also includes at least one trailing edge feed cavity 70. The airfoil may also include a plurality of large perimeter radial cooling passages 54 aligned along the suction side 52 of the airfoil 36, as well as a plurality of smaller perimeter radial cooling passages 56 aligned along the pressure side 50 of the airfoil 36. The airfoil may also include other numbers of cooling passages and arrangements including cooling passages with cross sections of different shapes and aligned in different orientations including axially and circumferentially. The airfoil 36 may also include other airfoil cooling, thermal management and/or structural architectures than those shown in Fig. 3. Film cooling holes (not shown) are often placed around the outer periphery of the airfoil. For example, film cooling holes (not shown) are often placed along the leading edge, the trailing edge, the suction side and the pressure side. Cooling air flows through film cooling holes (not shown) from one or more internal airfoil passages 54, 56, 62, 64, 66, 68, 70 to the exterior of the airfoil 36.

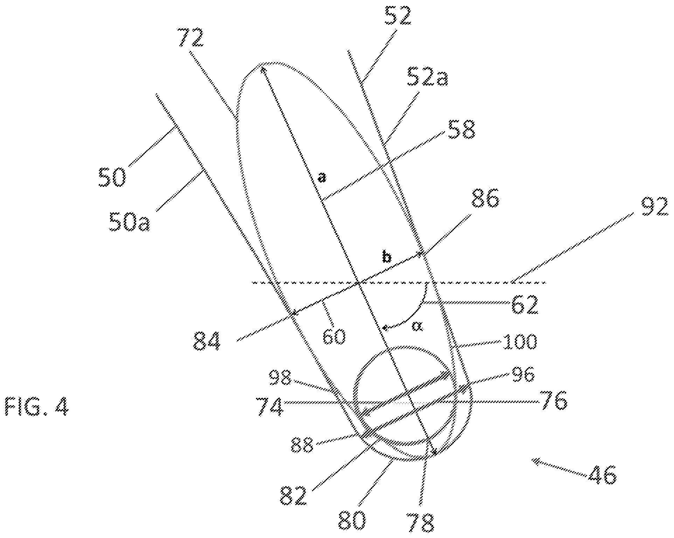

Fig. 4 illustrates an enlarged radially inward-looking view of the trailing edge portion of the airfoil 36 of Fig. 3 within circle B. The enlarged portion of the airfoil trailing edge 46 of Fig. 4 illustrates the airfoil pressure side 50 and the suction side 52. The pressure side 50 and suction side 52 approach the trailing edge 46, and gradually converge towards each other. Each of the pressure side 50 and suction side 52 include linear portions (50a and 52a respectively) which are substantially linear with zero or near-zero curvature, as they approach the trailing edge 46. The near-zero curvature of the linear or substantially linear pressure side linear portion 50a and suction side linear portion 52a is defined by the airfoil design and may vary from one airfoil design to the next. With conventional airfoils, each of the pressure side 50 and suction side 52 transition to a nominal semicircle 80 at first and second nominal transitions 88, 96. The nominal semicircle is defined by a diameter 76, extending across the nominal semicircle 80, and extending from the pressure side 50 to the suction side 52. With conventional airfoils, the linear portions of the pressure side 50 and suction side 52 transition directly to the nominal semicircle 80 at first and second nominal transitions 88, 96.

Referring still to Fig. 4, the airfoil 36 of the embodiments disclosed herein includes an elliptical transition from the linear portions of the pressure side 50 and suction side 52 to a trailing edge tip 78. A first elliptical portion 98 extends from a first transition point 84 on the pressure side 50 to the tip 78 of the trailing edge 46. A second elliptical portion 100 extends from a second transition point 86 on the suction side 52 to the tip 78 of the trailing edge 46. The first and second transition points 84, 86 define the point at which the linear portions (50a, 52a) of the pressure side and the suction side 50, 52 transition to the respective first and second elliptical portions 98, 100. The curvatures of each of the first and second elliptical portions 98, 100 are defined by an ellipse 72, which itself is defined by a major axis 58, and a minor axis 60. The major axis 58 may also be represented by the variable "a" while the minor axis may also be represented by the variable "b." The "pointiness" or elongation of the ellipse 72 can be characterized using the ratio of the length of the major axis 58 divided by the length of the minor axis 60, which is also known as the a/b ratio. The major axis 58 may be oriented at a first angle 62 which is defined in terms of the axial direction 92 such that the major axis 58 of the ellipse 72 is aligned with a camber line of the airfoil 36 (and thus does not conform to the invention as claimed), where the camber line is the mid-point between the airfoil pressure side 50 and the airfoil suction side 52 at any point between the leading edge 44 (not shown) and the trailing edge 46. Stated otherwise, the camber line of the airfoil may be defined as the set of points that are equidistant between the pressure side 50 and the suction side 52. Each of the first and second transition points 84, 86 occur upstream of (or further away from the trailing edge tip 78 than) the first and second nominal transitions 88, 96.

Still referring to Fig. 4, the airfoil 36 includes a circular trailing edge portion defined by a circle 82 that tangentially overlaps with each of the first and second elliptical portions 98, 100 in the vicinity of the trailing edge tip 78. The circle 82 may have a circle diameter 74 that is less than the semicircular diameter 76 of the nominal trailing edge. The circle 82 defines the curvature of the trailing edge 46 at the trailing edge tip 78. Stated otherwise, the curvature of the airfoil 36 at the trailing edge tip 78 is circular rather than elliptical, causing the trailing edge tip 78 to be more rounded than it would have been with an elliptical curvature. The elliptical contouring of the airfoil 36 along the pressure side 50 and suction side 52 approaching the trailing edge 46 reduces the trailing edge pressure losses resulting in more efficient flow past the airfoil 36 which in turn increases the turbine efficiency. Stated otherwise, elliptically tapering the airfoil 36 along the pressure side 50 and suction side 52 approaching the trailing edge 46 results in a "thinning" of the airfoil which in turn makes the airfoil more aerodynamic. The circular curvature at the trailing edge tip 78, makes it easier to perform machining operations such as drilling (i.e., via electrical discharge machining (EDM), for example) trailing edge cooling holes for two reasons. Firstly, a circle has constant curvature resulting in drilling operations that may be controlled precisely regardless of where along the circular curvature the drilling operations occur (as compared to an ellipse, which has constantly varying curvature). Secondly, the overall curvature of the trailing edge 46 at the tip 78 may be reduced with a circular shape versus an elliptical one, again resulting in simplified machining.

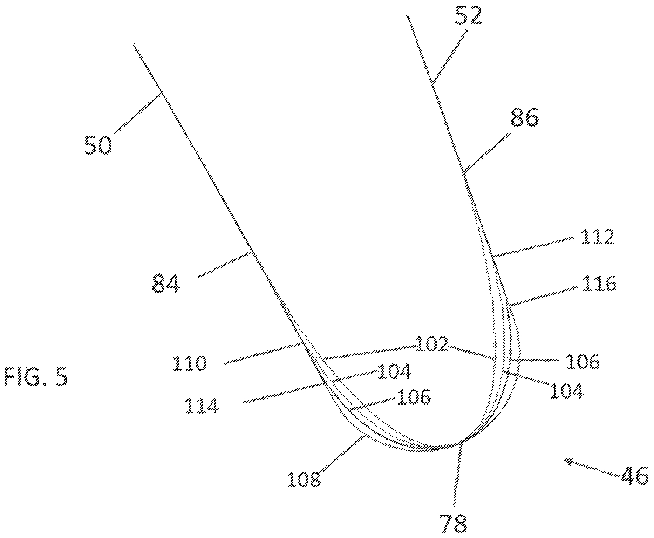

Fig. 5 illustrates an enlarged radially inward-looking view of the trailing edge portion of the airfoil 36 of Fig. 3 within circle B. The enlarged portion of the airfoil trailing edge 46 of Fig. 5 illustrates elliptical contouring of the airfoil 36 at the trailing edge 46, assuming various ellipse a/b ratios. Fig. 5 illustrates a first elliptical curvature 102 which tangentially diverges from each of the pressure side 50 and the suction side 52 at the first and second transition points 84, 86. The a/b of the first elliptical curvature 102 is 3.0. Fig. 5 also illustrates a second elliptical curvature 104 which tangentially diverges from each of the pressure side 50 and the suction side 52 at a third transition point 110 disposed on the pressure side 50 and a fourth transition point 112 disposed on the suction side 52. The a/b of the second elliptical curvature 104 is 2.0. Fig. 5 also illustrates a third elliptical curvature 106 which tangentially diverges from each of the pressure side 50 and the suction side 52 at a fifth transition point 114 disposed on the pressure side 50 and a sixth transition point 116 disposed on the suction side 52. The a/b of the third elliptical curvature 106 is 1.5. Fig. 5 also illustrates an airfoil trailing edge 46 with circular curvature 106 which may be considered as the "baseline" configuration.

Still referring to Fig. 5, as the a/b ratio of the curvature trailing edge 46 increases, the transition point moves further away from the trailing edge tip 78. Stated otherwise, with higher a/b ratios, the elliptical tapering of the airfoil 36 at the trailing edge 46 occurs earlier and further away from the trailing edge tip 78, resulting in a narrower airfoil 36 at the trailing edge 46. The narrower the trailing edge 46, the more aerodynamic the airfoil 36 (i.e., the trailing edge losses are lower). However, with airfoils that are narrower at the trailing edge 46, mechanical stresses may increase. In addition, there is less area and/or volume available for disposing cooling channels, holes and passageways therebetween. Furthermore, due to limits in manufacturing processes associated with the size various cooling features can be made within acceptable repeatability and tolerance requirements, the cooling features cannot necessarily be simply scaled down to smaller sizes to accommodate a narrower trailing edge 46. Therefore, due to manufacturing, cooling and/or stress-related constraints, there is likely an upper limit to the a/b ratio that can be employed, even though the higher a/b ratio designs may yield higher efficiency turbine airfoils.

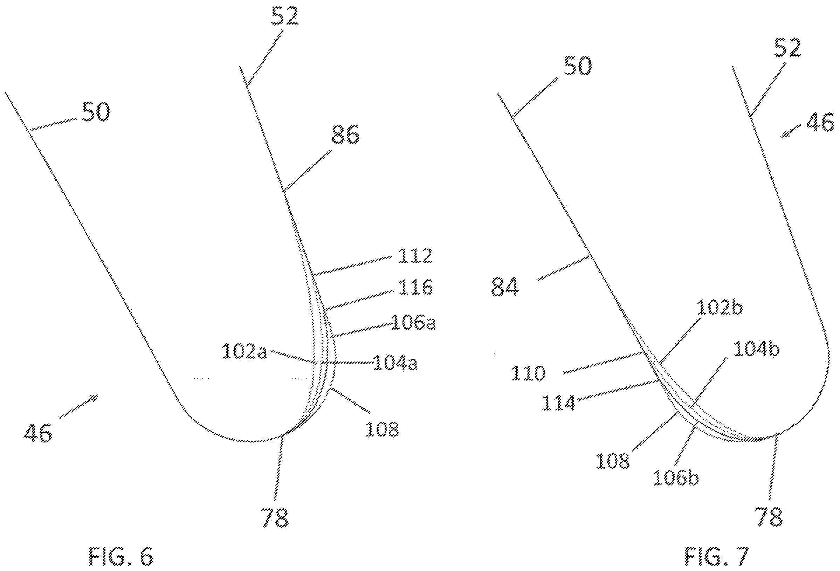

Fig. 6 illustrates an enlarged radially inward-looking view of the trailing edge portion of the airfoil 36 of Fig. 3 within circle B. The enlarged portion of the airfoil trailing edge 46 of Fig. 6 illustrates elliptical contouring only on the suction side 52 of the airfoil 36 at the trailing edge 46, assuming various ellipse a/b ratios. A first elliptical curvature 102a with an a/b ratio of 3.0 tapers the suction side 52 from a second transition point 86 to the airfoil trailing edge tip 78. A second elliptical curvature 104a with an a/b ratio of 2.0 tapers the suction side 52 from a fourth transition point 112 to the airfoil trailing edge tip 78. A third elliptical curvature 106a with an a/b ratio of 1.5 tapers the suction side 52 from a sixth transition point 116 to the airfoil trailing edge tip 78. Fig. 6 also illustrates the baseline circular curvature 108 at the trailing edge tip 78. For the various elliptical curvatures, as the a/b ratio decreases, the transition point from linear to elliptical moves closer to the trailing edge tip 78.

Fig. 7 illustrates an enlarged radially inward-looking view of the trailing edge portion of the airfoil 36 of Fig. 3 within circle B. The enlarged portion of the airfoil trailing edge 46 of Fig. 7 illustrates elliptical contouring only on the pressure side 50 of the airfoil 36 at the trailing edge 46, assuming various ellipse a/b ratios. A first elliptical curvature 102b with an a/b ratio of 3.0 tapers the pressure side 52 from a first transition point 84 to the airfoil trailing edge tip 78. A second elliptical curvature 104b with an a/b ratio of 2.0 tapers the pressure side 50 from a third transition point 110 to the airfoil trailing edge tip 78. A third elliptical curvature 106b with an a/b ratio of 1.5 tapers the pressure side 50 from a fifth transition point 114 to the airfoil trailing edge tip 78. Fig. 7 also illustrates the baseline circular curvature 108 at the trailing edge tip 78. For the various elliptical curvatures, as the a/b ratio decreases, the transition point from linear to elliptical moves closer to the trailing edge tip 78. For each of the embodiments of Figures 6 and 7, elliptical tapering is disposed only on one side of the airfoil (pressure side 50 or suction side 52). With airfoil designs in which there is not enough space to taper both the pressure side 50 and the suction side 52, there may remain an aerodynamic benefit to taper only one of the sides. Due to the magnitude of the aerodynamic benefit of tapering only the pressure side 50 versus tapering only the suction side 52, as well as the ability to provide the required cooling to each of the pressure side 50 and the suction side 52 at the trailing edge 46, it may become apparent that tapering one side provides an advantage over tapering the other side. On the other hand, it may instead be beneficial to taper both sides, but to a lesser degree, for example at a lesser a/b ratio (i.e., instead of tapering only one side at a higher a/b ratio).

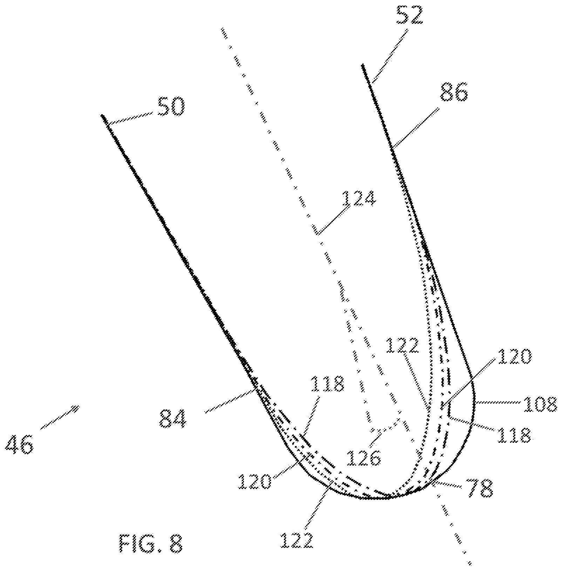

Fig. 8 illustrates an enlarged radially inward-looking view of the trailing edge portion of the airfoil 36 of Fig. 3 within circle B according to an embodiment of the present invention. The enlarged portion of the airfoil trailing edge 46 of Fig. 8 illustrates elliptical contouring at the trailing edge 46, assuming various ellipse skew angles. The skew angle 126 is defined as an offset between the airfoil camber line 124 and the major axis 58 (not shown) of the ellipse 72 (not shown) that defines the elliptical contouring. (See also Fig. 3). Each of the elliptical contourings illustrated in Fig. 8 have been rotated or tilted toward the airfoil pressure side 50 at a certain skew angle 126. A first elliptical contouring 118 represents an ellipse 72 that has been rotated at a skew angle of 1 degree, relative to the camber line 124. A second elliptical contouring 120 represents an ellipse 72 (not shown) that has been rotated at a skew angle of 3 degrees, relative to the camber line 124. A third elliptical contouring 122 represents an ellipse 72 (not shown) that has been rotated at a skew angle of 6 degrees, relative to the camber line 124. All three of the elliptical curvatures illustrated in Fig. 8 correspond to an a/b ration of 3.0. Skewing the ellipse 72 relative to the camber line 124 may be beneficial when biasing the elliptical contouring toward the pressure side 50 or the suction side 52 is desired. When faced with being able to contour only the pressure side 50 or the suction side 52 (due to cooling, mechanical stress, aerodynamic, and other factors) using a skewed approach may also be considered as a viable alternative option. As illustrated in Fig. 8, the third elliptical contouring 122, which is skewed at an angle of 6 degrees relative to the camber line 124, includes a first transition point 84 along the pressure side 50 and a second transition point 86 along the suction side. Because of the 6-degree skew angle 126 toward the pressure side, the first transition point 84 is much closer to the trailing edge tip 78, than the second transition point 86. In the embodiment of Fig. 8, the first transition point 84 is less than half the upstream distance (i.e., relative to the direction of the camber line 124) from the trailing edge tip 78 as is the second transition point 86. Each of the first and second transition points 84, 86 represent the transition between the linear and elliptical portions of the airfoil 36 pressure and suction sides 50, 52. The baseline circular curvature 108 at the airfoil leading edge 46 is also illustrated in Fig. 8.

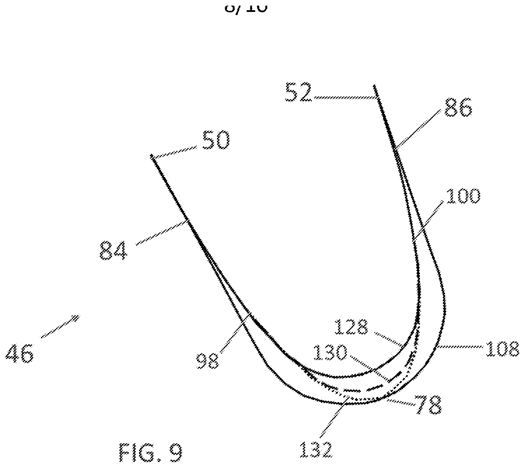

Fig. 9 illustrates an enlarged radially inward-looking view of the trailing edge portion of the airfoil 36 of Fig. 3 within circle B. The enlarged portion of the airfoil trailing edge 46 of Fig. 9 illustrates a hybrid embodiment with elliptical contouring along the pressure side 50 and suction side 52, and circular curvature at the trailing edge tip 78. As illustrated in Fig. 9, the first elliptical portion 98 on the airfoil pressure side 50 tapers the trailing edge 46 from a first transition point 84 toward the airfoil trailing edge tip 78. The second elliptical portion 100 on the airfoil suction side 52 tapers the trailing edge 46 from a second transition point 86 toward the airfoil trailing edge tip 78. Each of the first and second transition points 84, 86 represent the transition between the linear and elliptical portions of the airfoil 36 pressure and suction sides 50, 52. Each of the first and second elliptical portions 98, 100 correspond to an ellipse 72 (not shown) with an a/b ratio of 3.0. The baseline circular curvature 108 at the airfoil leading edge 46 illustrated in Fig. 9 defines a baseline diameter. A first tip circle 128 tangentially intersects both the first elliptical portion 98 and the second elliptical portion 100. The first tip circle 128 has a diameter that is 80% of the baseline diameter. A second tip circle 130 tangentially intersects both the first elliptical portion 98 and the second elliptical portion 100. The second tip circle 130 has a diameter that is 60% of the baseline diameter. By employing one of the first and second tip circles 128, 130, an elliptical tip portion 132 would be truncated and/or removed at the airfoil trailing edge tip 78. As discussed above, the first and second tip circles 128, 130 allow for the ease of machining and/or drilling cooling holes as well as other trailing edge features. As the diameter of the first and second tip circles 128, 130 increases, the ease of manufacture may increase, but the efficiency of the airfoil 36 may decrease. Thus, it is advantageous to select a tip circle diameter corresponding to the smallest diameter that still allows acceptable manufacturability. Accordingly, it may be possible to achieve both larger a/b ratios and smaller tip circle diameters with larger airfoils as compared to smaller airfoils.

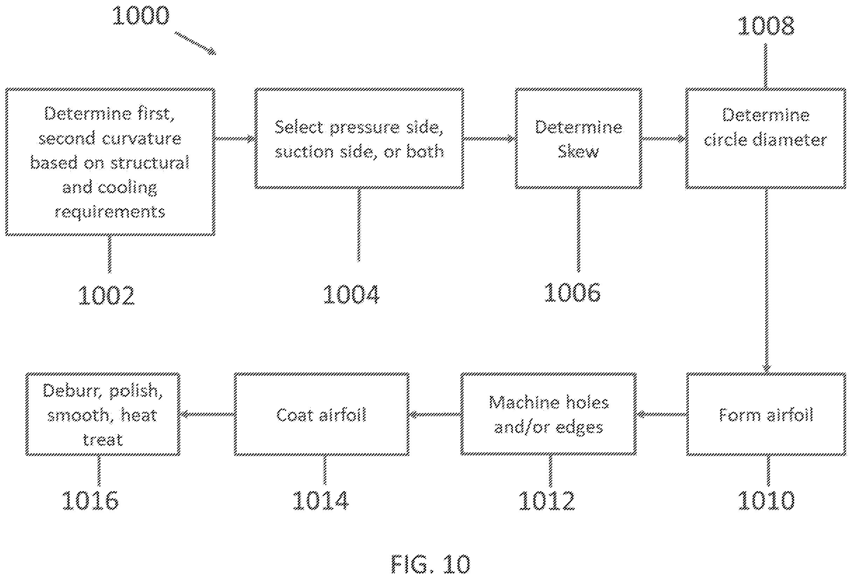

Fig. 10 illustrates a method 1000 of manufacturing an airfoil 36 according to the embodiments disclosed herein. At step 1002, the method includes determining the first and second elliptical curvatures to be used, as well as cooling requirements at the trailing edge 46. At step 1004, the method includes selecting the location(s) for applying the contouring and/or elliptical tapering, where the locations may include the airfoil pressure side 50 or the suction side 52 or both. At step 1006, the method 100 includes determining what skew angle 126 to use, if any, where a positive skew angle 126 may correspond to biasing the ellipse 72 toward a pressure side 50 and a negative skew angle 126 may correspond to biasing the ellipse 72 toward a suction side 52. At step 1008, the method 1000 includes determining the diameter of the tip circle 128, 130 to be used. At 1010, the method 1000 includes forming the airfoil 36. Forming the airfoil 36 may include using investment casting, forging, additive manufacturing, other processes and/or hybrid methods. Forming the airfoil 36 may also include forming any elliptical and/or circular contouring at the trailing edge 46 as well as forming any cooling holes, other cooling passages, and/or other trailing edge features. Alternatively forming cooling holes, other cooling features and the elliptical and circular contouring at the trailing edge 46 may be included at step 1012 via post-forming machining processes such as drilling, electrical discharge machining (EDM), laser ablation, milling, as well as other processes. At step 1014, the airfoil 36 may be coated with a coating such as thermal barrier coating (TBC), environmental barrier coating (EBC), bond coats and other types of coatings. At step 1016, the method 1000 may include post-processing and/or finishing steps such as deburring, polishing, surface smoothing, sanding, heat treating as well as other processes. Aspects according to the embodiments disclosed herein may omit one of more steps of the method 1000. Similarly, the embodiments disclosed herein of method 1000 may include other steps and may include performing the steps in a different order.

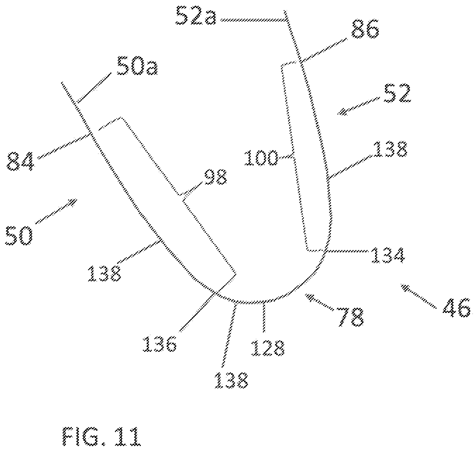

Fig. 11 illustrates an enlarged radially inward-looking view of the trailing edge portion of the airfoil 36 of Fig. 3 within circle B. The enlarged portion of the airfoil trailing edge 46 of Fig. 11 illustrates a hybrid embodiment with elliptical contouring along the pressure side 50 and suction side 52, and circular curvature at the trailing edge tip 78. As illustrated in Fig. 11, the pressure side 50 transitions from a pressure side linear portion 50a to a first elliptical portion 98 at a first transition point 84. The suction side 52 transitions from a suction side linear portion 52a to a second elliptical portion 100 at a second transition point 86. The first elliptical portion 98 transitions to a circular tip portion 128 at a first tip transition point 136 while the second elliptical portion 100 transitions to the circular tip portion 128 at a second tip transition point 134. In the embodiment of Fig. 11, each of the first and second transition points are equidistant to the trailing edge 78, which is aligned with a camber line 126 (not shown) since the skew angle is 0 degrees, which does not correspond to the invention as claimed. The first and second elliptical portions 98, 100 may be defined by an ellipse 72 (not shown) with an a/b ratio from about 1.1 to about 5. In other embodiments, the first and second elliptical portions 98, 100 may be defined by an ellipse 72 (not shown) with an a/b ratio from about 1.3 to about 4. In other embodiments, the first and second elliptical portions 98, 100 may be defined by an ellipse 72 (not shown) with an a/b ratio from about 1.5 to about 3.5. In other embodiments, the first and second elliptical portions 98, 100 may be defined by an ellipse 72 (not shown) with an a/b ratio from about 2.0 to about 3.0. In other embodiments, the first and second elliptical portions 98, 100 may be defined by an ellipse 72 with a/b ratios in other ranges and subranges as those mentioned above, including embodiments in which the first elliptical portion 98 is defined by an ellipse with a different a/b ratio than that of the second elliptical portion 100.

Referring still to Fig. 11, the trailing edge portion 46 may also include at least one coating 138 (TBC, EBC, bond coat, etc) disposed on the first and second elliptical portions 98, 100, on the circular tip portion 128, as well as elsewhere on the airfoil 36. A thickness of the coating 138 may vary to form the curvature of the first and/or second elliptical portions 98, 100 as well as the curvature of the circular tip portion 128. For example, the coating 138 disposed on the airfoil 36 may increase or decrease in thickness as the leading edge portion 46 transitions from the pressure side and suction side linear portions 50a, 52a to the first and second elliptical portions 98, 100 to the circular tip portion 128. The metallic and/or superalloy material with which the airfoil 36 may be formed may similarly be contoured in concert with the thickness of the coating 138 such that the profile of the finished airfoil 36, which includes both the material with which the airfoil 36 was formed as well as any coating 138 disposed thereon, transitions from linear portions to one or more elliptical portions to at least one circular portion at the trailing edge tip 78. Stated otherwise, the aerodynamic benefits discussed herein are based on the outermost surfaces and profile of the airfoil 36, regardless of whether the outermost surfaces include the material from which the airfoil 36 is formed or coating 138 disposed thereon. As such, in some embodiments, it may be beneficial to form the desired airfoil profile by varying the thickness of the coating 138 as the airfoil 36 transitions from the pressure side and suction side linear portions 50a, 52a to the first and second elliptical portions 98, 100 to the circular tip portion 128. The airfoil 36 may also be formed in the geometries and/or shapes described herein from ceramic and/or ceramic matrix composite (CMC) materials, and may be coated or uncoated. CMC airfoils 36, shaped according to the present embodiments, would have similar aerodynamic benefits to similarly shaped metallic airfoils.

The embodiments disclosed herein may include circular tip portions 128 that have a diameter that is about 5%, 10%, 20%, 40%, 60%, 80%, 90%, and 95%, as well as other percentages of the diameter of the baseline circular tip 108 shown in Figures 5-9. For example, the present embodiments may include circular tip portions 128 that have a diameter that is between about 55% and about 85% of the baseline circular tip 108. Similarly, the embodiments disclosed herein may include circular tip portions 128 that have a diameter that is between about 60% and about 80% of the baseline circular tip 108. Similarly, the embodiments disclosed herein may include circular tip portions 128 that have a diameter that is between about 60% and about 95% of the baseline circular tip 108. The invention includes other than 0 degrees skew angles from about -10 degrees to about 10 degrees, from about -8 degrees to about 8 degrees, from about -6 degrees to about 6 degrees, from about -4 degrees to about 4 degrees, from about -3 degrees to about 3 degrees, from about -1 degree to about 1 degree, and in other ranges and subranges, where a positive skew angle biases the elliptical tapering toward the pressure side 50 and a negative skew angle biases the elliptical tapering toward the suction side 52. For example, the invention includes other than 0 degrees skew angles from about -6 degrees to about -3 degrees or from about 3 degrees to about 6 degrees, or from about 1 degree to about 8 degrees or from about -8 degrees to about -1 degrees. The embodiments disclosed herein may include elliptical tapering along both a pressure side 50 and a suction side 52 in equal amounts, along only a suction side 52, along only a pressure side 50, and along both a pressure side 50 and a suction side 52 in different amounts.

The embodiments presented herein produce a smaller, lower-loss wake by locally decreasing the blockage at the trailing edge 46 of the airfoil 36 without substantially impacting the upstream airfoil thickness or the ability to drill trailing edge 46 cooling holes. A nominal circular trailing edge is replaced by an elliptical transition that blends the original airfoil surface to a smaller trailing edge circle. Employing a hybrid trialing edge including elliptical transitions at the pressure and suction sides 50, 52 along with a circular tip may improve the profile loss via smaller effective trailing edge blockage and improved airfoil base pressure. A smaller wake produced by the trailing edge of the embodiments disclosed herein also benefits downstream airfoils via reduced unsteady loss. By using an elliptical transition, the impact to airfoil thickness where internal cavities and cooling features reside is minimally impacted. Blending the ellipse back to a circular end minimizes discharge hole drilling concerns. Benefits of the embodiments disclosed herein may also include a reduced aerodynamic loss with minimal impact to mechanical design versus a traditional airfoil designed to the same final trailing edge circle diameter.

All cooled airfoils, particularly those that implement trailing edge discharge cooling flow, are expected to benefit from the application of this hybrid elliptical-circular approach. In addition to reducing the profile loss of the airfoil to which the new trailing edge is applied, unsteady losses in downstream airfoils may also improve due to the smaller velocity defect (wake) produced by the hybrid elliptical-circular trailing edge. Linear tapering, piecewise linear tapering (i.e., multiple linear segments), hyperbolic tapering, quadratic tapering, and/or other forms of geometric tapering at the trailing edge 46 may also improve the airfoil aerodynamics via reduced profile loss et al. However, elliptical tapering represents an enhanced gradual transition for increasing the curvature of the airfoil 36 from the linear portions at the pressure side and suction side 50, 52 moving toward the trailing edge tip 78.

While only certain features of the invention have been illustrated and described herein, many modifications and changes will occur to those skilled in the art. It is, therefore, to be understood that the appended claims are intended to cover all such modifications and changes as fall within the true spirit of the invention.

This written description uses examples to disclose the embodiments disclosed herein, including the best mode, and also to enable any person skilled in the art to practice the embodiments disclosed herein, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An airfoil comprising:
an airfoil body (36) extending from a radially inner root portion (48) to a radially outer tip portion (42), the airfoil body (36) extending from a pressure side (50) to a suction side (52), the airfoil body (36) extending from a leading edge (44) to a trailing edge portion (46);
the trailing edge portion (46) comprising:
a linear pressure side portion (50a);
a linear suction side portion (52a);
a trailing edge tip portion (78); and
at least one elliptical portion (98, 100) disposed between the trailing edge tip portion (78) and at least one of the linear pressure side portion (50a) and the linear suction side portion (52a);
**characterized in that**
the trailing edge tip portion (78) comprises a circular trailing edge tip portion (128) disposed directly downstream of the at least one elliptical portion (98, 100) and defined by a circle (82) that tangentially overlaps with the at least one elliptical portion (98, 100) in the vicinity of the trailing edge tip (78); and
the at least one elliptical portion is defined by an ellipse (72) having a skew angle (126) between -10 degrees and 10 degrees but within this range other than 0 degrees, wherein the skew angle is the angle between a major axis (a) of the ellipse (72) and a camber line (124) of the airfoil.

2. The airfoil of claim 1, wherein the at least one elliptical portion (98, 100) is disposed along the pressure side (50), the suction side (52), or both the pressure side (50) and the suction side (52).

3. The airfoil of claim 1 or 2, wherein a diameter (74) of the circular trailing edge tip portion (128) is between 10% and 90% of a diameter (76) of a baseline circular tip portion (108).

4. The airfoil of claim 1, wherein the at least one elliptical portion (98, 100) is defined by an ellipse (72) having an a/b ratio between 1.1 and 5.0, wherein "a" is representative of a length of the major axis (58) of the ellipse (72), and wherein "b" is representative of a length of a minor axis (60) of the ellipse (72).

5. The airfoil of claim 4, wherein the at least one elliptical portion (98, 100) further comprises:
a first elliptical portion (98) disposed on the pressure side (50); and
a second elliptical portion (100) disposed on the suction side (52);
wherein the airfoil further comprises:
a first transition point (84) disposed on the pressure side (50), the first transition point (84) defining a first transition between the pressure side linear portion (50a) and the first elliptical portion (98); and
a second transition point (86) disposed on the suction side (52), the second transition point (86) defining a second transition between the suction side linear portion (52a) and the second elliptical portion (100).

6. The airfoil of claim 5, wherein the trailing edge tip portion (78) further comprises:
a first tip transition point (136) disposed along the pressure side (50), the first tip transition point (136) defining a transition between the first elliptical portion (98) and the circular trailing edge tip portion (128); and
a second tip transition point (134) disposed along the suction side (52), the second tip transition point (134) defining a transition between the second elliptical portion (100) and the circular trailing edge tip portion (128).

7. The airfoil of claim 5, further comprising a trailing edge tip disposed at the downstream portion of the trailing edge tip portion (78),
wherein the first transition point (84) is less than half the upstream distance from the trailing edge tip as the second transition point (86).

8. The airfoil of claim 1, wherein the airfoil body (36) further comprises at least one coating (138), the at least one coating (138) comprising at least one of a thermal barriar coating, an environmental barrier coating, and a bond coat,
wherein a thickness of the at least one coating (138) varies to form the at least one elliptical portion (98, 100).

9. The airfoil of claim 1, further comprising at least one cooling hole, the at least one cooling hole disposed within the trailing edge portion (46).

10. The airfoil of claim 7, wherein
a diameter (74) of the circular trailing edge tip portion (128) is between 55% and 85% of a diameter (76) of a baseline circular tip portion (108); and
the skew angle (126) is between 3 degrees and 6 degrees.

11. A method (1000) of forming an airfoil (36) of any of claims 1 to 10, the method comprising:
determining (1002) an elliptical curvature of at least one elliptical portion (98, 100) of an airfoil trailing edge (46), the at least one elliptical portion (98, 100) disposed between a trailing edge tip portion (78) and at least one of a linear pressure side portion (50a) along an airfoil pressure side (50) and a linear suction side portion (52a) of an airfoil suction side (52), wherein the elliptical curvature is defined by an ellipse (72) having an a/b ratio between 1.1 and 5.0, wherein "a" is representative of a length of a major axis (58) of the ellipse (72), and wherein "b" is representative of a length of a minor axis (60) of the ellipse (72);
determining (1006) a skew angle (126) of the at least one elliptical portion (98, 100), wherein the skew angle (126) is defined as an angle between the major axis (58) of the ellipse (72) and a camber line (124) of the airfoil (36), wherein the skew angle (126) is between -10 degrees and 10 degrees but within this range other than 0 degrees;
determining (1008) a diameter (74) of a circular trailing edge tip portion (128) of the trailing edge tip portion (78), the circular trailing edge tip portion (128) disposed directly downstream of the at least one elliptical portion (98, 100) and defined by a circle (82) that tangentially overlaps with the at least one elliptical portion (98, 100) in the vicinity of the trailing edge tip (78); and
forming (1010) the airfoil (36).

12. The method of claim 11, wherein forming (1010) the airfoil (36) comprises forming the airfoil via one of additive manufacturing and investment casting.

13. The method of claim 12, further comprising at least one of drilling cooling holes into the airfoil (36), coating the airfoil (36), deburring the airfoil (36), polishing the airfoil (36), sanding the airfoil (36), surface smoothing the airfoil (36), and heat treating the airfoil (36).

14. A gas turbine engine (10) comprising:
a compressor section (12);
a combustor section (18); and
a turbine section (22), the turbine section comprising at least one airfoil (36), the at least one airfoil (36) being defined by any one of claims 1 to 10 .

## Patentansprüche

1. Schaufelblatt, umfassend:
einen Schaufelblattkörper (36), der sich von einem radial inneren Wurzelabschnitt (48) zu einem radial äußeren Spitzenabschnitt (42) erstreckt, wobei sich der Schaufelblattkörper (36) von einer Druckseite (50) zu einer Saugseite (52) erstreckt, wobei sich der Schaufelblattkörper (36) von einer Vorderkante (44) zu einem Hinterkantenabschnitt (46) erstreckt;
der Hinterkantenabschnitt (46) umfassend:
einen linearen Druckseitenabschnitt (50a);
einen linearen Saugseitenbschnitt (52a);
einen Hinterkantenspitzenabschnitt (78); und
mindestens einen elliptischen Abschnitt (98, 100), der zwischen dem Hinterkantenspitzenabschnitt (78) und mindestens einem des linearen Druckseitenabschnitts (50a) und des linearen Saugseitenabschnitts (52a) angeordnet ist;
**dadurch gekennzeichnet, dass**
der Hinterkantenspitzenabschnitt (78) einen kreisförmigen Hinterkantenspitzenspitzenabschnitt (128) umfasst, der direkt stromabwärts des mindestens einen elliptischen Abschnitts (98, 100) angeordnet und durch einen Kreis (82) definiert ist, der sich mit dem mindestens einen elliptischen Abschnitt (98, 100) in der Nähe der Hinterkantenspitze (78) tangential überlappt; und
der mindestens eine elliptische Abschnitt durch eine Ellipse (72) definiert ist, die einen Schräglaufwinkel (126) zwischen -10 Grad und 10 Grad, aber innerhalb dieses Bereichs außer 0 Grad aufweist, wobei der Schräglaufwinkel der Winkel zwischen einer Hauptachse (a) der Ellipse (72) und einer Wölbungslinie (124) des Schaufelblatts ist.

2. Schaufelblatt nach Anspruch 1, wobei der mindestens eine elliptische Abschnitt (98, 100) entlang der Druckseite (50), der Saugseite (52) oder sowohl der Druckseite (50) als auch der Saugseite (52) angeordnet ist.

3. Schaufelblatt nach Anspruch 1 oder 2, wobei ein Durchmesser (74) des kreisförmigen Hinterkantenspitzenabschnitts (128) zwischen 10 % und 90 % eines Durchmessers (76) eines kreisförmigen Basisspitzenabschnitts (108) beträgt.

4. Schaufelblatt nach Anspruch 1, wobei der mindestens eine elliptische Abschnitt (98, 100) durch eine Ellipse (72) definiert ist, die ein a/b-Verhältnis zwischen 1,1 und 5,0 aufweist, wobei "a" für eine Länge der Hauptachse (58) der Ellipse (72) steht und wobei "b" für eine Länge einer Nebenachse (60) der Ellipse (72) steht.

5. Schaufelblatt nach Anspruch 4, wobei der mindestens eine elliptische Abschnitt (98, 100) ferner umfasst:
einen ersten elliptischen Abschnitt (98), der auf der Druckseite (50) angeordnet ist; und
einen zweiten elliptischen Abschnitt (100), der auf der Saugseite (52) angeordnet ist;
wobei das Schaufelblatt ferner umfasst:
einen ersten Übergangspunkt (84), der auf der Druckseite (50) angeordnet ist, wobei der erste Übergangspunkt (84) einen ersten Übergang zwischen dem linearen Druckseitenabschnitt (50a) und dem ersten elliptischen Abschnitt (98) definiert; und
einen zweiten Übergangspunkt (86), der auf der Saugseite (52) angeordnet ist, wobei der zweite Übergangspunkt (86) einen zweiten Übergang zwischen dem linearen Saugseitenabschnitt (52a) und dem zweiten elliptischen Abschnitt (100) definiert.

6. Schaufelblatt nach Anspruch 5, wobei der Hinterkantenspitzenabschnitt (78) ferner umfasst:
einen ersten Spitzenübergangspunkt (136), der entlang der Druckseite (50) angeordnet ist, wobei der erste Spitzenübergangspunkt (136) einen Übergang zwischen dem ersten elliptischen Abschnitt (98) und dem kreisförmigen Hinterkantenspitzenabschnitt (128) definiert; und
einen zweiten Spitzenübergangspunkt (134), der entlang der Saugseite (52) angeordnet ist, wobei der zweite Spitzenübergangspunkt (134) einen Übergang zwischen dem zweiten elliptischen Abschnitt (100) und dem kreisförmigen Hinterkantenspitzenabschnitt (128) definiert.

7. Schaufelblatt nach Anspruch 5, ferner umfassend eine Hinterkantenspitze, die an dem stromabwärtigen Abschnitt des Hinterkantenspitzenabschnitts (78) angeordnet ist,
wobei der erste Übergangspunkt (84) weniger als die Hälfte des stromaufwärtigen Abstands von der Hinterkantenspitze als der zweite Übergangspunkt (86) ist.

8. Schaufelblatt nach Anspruch 1, wobei der Schaufelblattkörper (36) ferner mindestens eine Beschichtung (138) umfasst, die mindestens eine Beschichtung (138) umfassend mindestens eine von einer Wärmebarrierebeschichtung, einer Umgebungsbarrierebeschichtung und einer Haftschicht,
wobei eine Dicke der mindestens einen Beschichtung (138) variiert, um den mindestens einen elliptischen Abschnitt (98, 100) auszubilden.

9. Schaufelblatt nach Anspruch 1, ferner umfassend mindestens ein Kühlloch, wobei das mindestens eine Kühlloch innerhalb des Hinterkantenabschnitts (46) angeordnet ist.

10. Schaufelblatt nach Anspruch 7, wobei
ein Durchmesser (74) des kreisförmigen Hinterkantenspitzenabschnitts (128) zwischen 55 % und 85 % eines Durchmessers (76) eines kreisförmigen Basisspitzenabschnitts (108) beträgt; und
der Schräglaufwinkel (126) zwischen 3 Grad und 6 Grad beträgt.

11. Verfahren (1000) zum Ausbilden eines Schaufelblatts (36) nach einem der Ansprüche 1 bis 10, das Verfahren umfassend:
Bestimmen (1002) einer elliptischen Krümmung von mindestens einem elliptischen Abschnitt (98, 100) einer Schaufelblatthinterkante (46), wobei der mindestens eine elliptische Abschnitt (98, 100) zwischen einem Hinterkantenspitzenabschnitt (78) und mindestens einem von einem linearen Druckseitenabschnitt (50a) entlang einer Schaufelblattdruckseite (50) und einem linearen Saugseitenabschnitt (52a) einer Schaufelblattsaugseite (52) angeordnet ist, wobei die elliptische Krümmung durch eine Ellipse (72) definiert ist, die ein a/b-Verhältnis zwischen 1,1 und 5,0 aufweist, wobei "a" für eine Länge einer Hauptachse (58) der Ellipse (72) steht und wobei "b" für eine Länge einer Nebenachse (60) der Ellipse (72) steht;
Bestimmen (1006) eines Schräglaufwinkels (126) des mindestens einen elliptischen Abschnitts (98, 100), wobei der Schräglaufwinkel (126) als ein Winkel zwischen der Hauptachse (58) der Ellipse (72) und einer Wölbungslinie (124) des Schaufelblatts (36) definiert ist, wobei der Schräglaufwinkel (126) zwischen -10 Grad und 10 Grad, aber innerhalb dieses Bereichs außer 0 Grad beträgt;
Bestimmen (1008) eines Durchmessers (74) eines kreisförmigen Hinterkantenspitzenabschnitts (128) des Hinterkantenspitzenabschnitts (78), wobei der kreisförmige Hinterkantenspitzenabschnitt (128) direkt stromabwärts des mindestens einen elliptischen Abschnitts (98, 100) angeordnet und durch einen Kreis (82) definiert ist, der sich mit dem mindestens einen elliptischen Abschnitt (98, 100) in der Nähe der Hinterkantenspitze (78) tangential überlappt; und
Ausbilden (1010) des Schaufelblatts (36).

12. Verfahren nach Anspruch 11, wobei das Ausbilden (1010) des Schaufelblatts (36) das Ausbilden des Schaufelblatts mittels einem von additiver Fertigung und Investmentguss umfasst.

13. Verfahren nach Anspruch 12, ferner umfassend mindestens eines von Bohren von Kühllöchern in das Schaufelblatt (36), Beschichten des Schaufelblatts (36), Entgraten des Schaufelblatts (36), Polieren des Schaufelblatts (36), Schleifen des Schaufelblatts (36), Oberflächenglätten des Schaufelblatts (36) und Hitzebehandeln des Schaufelblatts (36).

14. Gasturbinentriebwerk (10), umfassend:
einen Verdichterabschnitt (12);
einen Brennkammerabschnitt (18); und
einen Turbinenabschnitt (22), der Turbinenabschnitt umfassend mindestens ein Schaufelblatt (36), wobei das mindestens eine Schaufelblatt (36) nach einem der Ansprüche 1 bis 10 definiert ist.

## Revendications

1. Profil comprenant :
un corps de profil (36) s'étendant à partir d'une partie de base radialement interne (48) jusqu'à une partie de pointe radialement externe (42), le corps de profil (36) s'étendant à partir d'un côté pression (50) jusqu'à un côté aspiration (52), le corps de profil (36) s'étendant à partir d'un bord d'attaque (44) jusqu'à une partie de bord de fuite (46) ;
la partie de bord de fuite (46) comprenant :
une partie côté pression linéaire (50a) ;
une partie côté aspiration linéaire (52a) ;
une partie de pointe de bord de fuite (78) ; et
au moins une partie elliptique (98, 100) disposée entre la partie de pointe de bord de fuite (78) et au moins l'une de la partie côté pression linéaire (50a) et de la partie côté aspiration linéaire (52a) ;
**caractérisée en ce que**
la partie de pointe de bord de fuite (78) comprend une partie de pointe de bord de fuite circulaire (128) disposée directement en aval de l'au moins une partie elliptique (98, 100) et définie par un cercle (82) qui chevauche tangentiellement l'au moins une partie elliptique (98, 100) au voisinage de la pointe de bord de fuite (78) ; et
l'au moins une partie elliptique est définie par une ellipse (72) ayant un angle d'inclinaison (126) compris entre -10 degrés et 10 degrés mais dans cette plage autre que 0 degré, dans lequel l'angle d'inclinaison est l'angle compris entre un axe principal (a) de l'ellipse (72) et une ligne de cambrure (124) du profil.

2. Profil selon la revendication 1, dans lequel l'au moins une partie elliptique (98, 100) est disposée le long du côté pression (50), du côté aspiration (52), ou à la fois du côté pression (50) et du côté aspiration (52).

3. Profil selon la revendication 1 ou 2, dans lequel un diamètre (74) de la partie de pointe de bord de fuite circulaire (128) est compris entre 10 % et 90 % d'un diamètre (76) d'une partie de pointe circulaire de ligne de base (108).

4. Profil selon la revendication 1, dans lequel l'au moins une partie elliptique (98, 100) est définie par une ellipse (72) ayant un rapport a/b compris entre 1.1 et 5.0, dans lequel « a » est représentatif d'une longueur de l'axe principal (58) de l'ellipse (72), et dans lequel « b » est représentatif d'une longueur d'un petit axe (60) de l'ellipse (72).

5. Profil selon la revendication 4, dans lequel l'au moins une partie elliptique (98, 100) comprend en outre :
une première partie elliptique (98) disposée sur le côté pression (50) ; et
une seconde partie elliptique (100) disposée sur le côté aspiration (52) ;
dans lequel le profil comprend en outre :
un premier point de transition (84) disposé sur le côté pression (50), le premier point de transition (84) définissant une première transition entre la partie linéaire côté pression (50a) et la première partie elliptique (98) ; et
un second point de transition (86) disposé sur le côté aspiration (52), le second point de transition (86) définissant une seconde transition entre la partie linéaire côté aspiration (52a) et la seconde partie elliptique (100).

6. Profil selon la revendication 5, dans lequel la partie de pointe de bord de fuite (78) comprend en outre :
un premier point de transition de pointe (136) disposé le long du côté pression (50), le premier point de transition de pointe (136) définissant une transition entre la première partie elliptique (98) et la partie de pointe de bord de fuite circulaire (128) ; et
un second point de transition de pointe (134) disposé le long du côté aspiration (52), le second point de transition de pointe (134) définissant une transition entre la seconde partie elliptique (100) et la partie de pointe de bord de fuite circulaire (128).

7. Profil selon la revendication 5, comprenant en outre une pointe de bord de fuite disposée au niveau de la partie en aval de la partie de pointe de bord de fuite (78),
dans lequel le premier point de transition (84) est inférieur à la moitié de la distance en amont à partir de la pointe de bord de fuite en guise de second point de transition (86).

8. Profil selon la revendication 1, dans lequel le corps de profil (36) comprend en outre au moins un revêtement (138), l'au moins un revêtement (138) comprenant au moins l'un parmi un revêtement de barrière thermique, revêtement de barrière environnementale, et revêtement de liaison,
dans lequel une épaisseur de l'au moins un revêtement (138) varie pour former l'au moins une partie elliptique (98, 100).

9. Profil selon la revendication 1, comprenant en outre au moins un trou de refroidissement, l'au moins un trou de refroidissement étant disposé dans la partie de bord de fuite (46).

10. Profil selon la revendication 7, dans lequel
un diamètre (74) de la partie de pointe de bord de fuite circulaire (128) est compris entre 55 % et 85 % d'un diamètre (76) d'une partie de pointe circulaire de ligne de base (108) ; et
l'angle d'inclinaison (126) est compris entre 3 degrés et 6 degrés.

11. Procédé (1000) de formation d'un profil (36) selon l'une quelconque des revendications 1 à 10, le procédé comprenant :
la détermination (1002) d'une courbure elliptique d'au moins une partie elliptique (98, 100) d'un bord de fuite de profil (46), l'au moins une partie elliptique (98, 100) étant disposée entre une partie de pointe de bord de fuite (78) et au moins l'une d'une partie côté pression linéaire (50a) le long d'un côté pression de profil (50) et d'une partie côté aspiration linéaire (52a) d'un côté aspiration de profil (52), dans lequel la courbure elliptique est définie par une ellipse (72) ayant un rapport a/b compris entre 1.1 et 5.0, dans lequel « a » est représentatif d'une longueur d'un axe principal (58) de l'ellipse (72), et dans lequel « b » est représentatif d'une longueur d'un petit axe (60) de l'ellipse (72) ;
la détermination (1006) d'un angle d'inclinaison (126) de l'au moins une partie elliptique (98, 100), dans lequel l'angle d'inclinaison (126) est défini en guise d'angle entre l'axe principal (58) de l'ellipse (72) et une ligne de cambrure (124) du profil (36), dans lequel l'angle d'inclinaison (126) est compris entre - 10 degrés et 10 degrés mais dans cette plage autre que 0 degré ;
la détermination (1008) d'un diamètre (74) d'une partie de pointe de bord de fuite circulaire (128) de la partie de pointe de bord de fuite (78), la partie de pointe de bord de fuite circulaire (128) étant disposée directement en aval de l'au moins une partie elliptique (98, 100) et définie par un cercle (82) qui chevauche tangentiellement l'au moins une partie elliptique (98, 100) au voisinage de la pointe de bord de fuite (78) ; et
la formation (1010) du profil (36).

12. Procédé selon la revendication 11, dans lequel la formation (1010) du profil (36) comprend la formation du profil par l'intermédiaire d'une fabrication additive et coulée de précision.

13. Procédé selon la revendication 12, comprenant en outre au moins l'un parmi un forage de trous de refroidissement dans le profil (36), revêtement du profil (36), ébavurage du profil (36), polissage du profil (36), ponçage du profil (36), lissage de surface du profil (36), et traitement thermique du profil (36).

14. Moteur à turbine à gaz (10) comprenant :
une section de compresseur (12) ;
une section de chambre de combustion (18) ; et
une section de turbine (22), la section de turbine comprenant au moins un profil (36), l'au moins un profil (36) étant défini par l'une quelconque des revendications 1 à 10.
